# EUROPÄISCHE PATENTSCHRIFT

(11) **EP 1 339 805 B1**
(45) Veröffentlichungstag und Bekanntmachung des Hinweises auf die Patenterteilung: **18.01.2006**
(21) Anmeldenummer: 01984792.0
(22) Anmeldetag: 30.11.2001
(51) Int. Cl.: C09D 5/02, C09D 7/14

(54) **FARB- UND/ODER EFFEKTGEBENDE PULVERSLURRY, VERFAHREN ZU IHRER HERSTELLUNG UND IHRE VERWENDUNG**
COLOUR AND/OR EFFECT-BEARING POWDER SLURRY, METHOD FOR PRODUCING THE SAME AND USE THEREOF
BOUE PULVERULENTE DE COULEUR ET/OU A EFFET, SON PROCEDE DE PRODUCTION ET SON UTILISATION

(30) Priorität: 07.12.2000 DE 10060765
(43) Veröffentlichungstag der Anmeldung: 03.09.2003
(73) Patentinhaber: BASF Coatings AG, 48165 Münster (DE)
(72) Erfinder: WEINTZ, Hans-Joachim, 48308 Senden (DE); WEBER, Dieter, 51491 Overrath (DE)
(74) Vertreter: Münch, Volker
(86) Internationale Anmeldenummer: PCT/EP2001/014018
(87) Internationale Veröffentlichungsnummer: WO 2002/046320

(56) Entgegenhaltungen:
- EP-A- 0 614 951
- EP-A- 0 752 455
- US-A- 5 840 799

## Beschreibung

Die vorliegende Erfindung betrifft neue farb- und/oder effektgebende Pulverslurries. Außerdem betrifft die vorliegende Erfindung ein neues Verfahren zur Herstellung farb- und/oder effektgebender Pulverslurries. Des weiteren betrifft die vorliegende Erfindung ein neues Verfahren für die nachträgliche Tönung farb-und/oder effektgebender Pulverslurries. Nicht zuletzt betrifft die vorliegende Erfindung ein neues Mischsystem und Modulsystem für farb- und/oder effektgebende Pulverslurries.

Farb- und/oder effektgebende Pulverslurries, d.h. wäßrige Dispersionen farb-und/oder effektgebender Pulverlacke, sind seit langem bekannt.

So geht aus der japanischen Patentanmeldung JP 53 109 540 A 1 (Derwent-Referat 78800A/44) eine nicht näher spezifierte farb- und/oder effektgebende Pulverslurry für die Herstellung einer farb- und/oder effektgebenden Basislackierung hervor.

Aus der deutschen Offenlegungsschrift DE 27 10 421 A 1 ist eine Metalleffektpigmente enthaltende Pulverslurry auf der Basis von aminneutralisierten Acrylatcopolymerisaten und Melaminharzen oder von Polyestern und Epoxidharzen bekannt. Die bekannte Pulverslurry liefert glatte, glänzende, metallische Beschichtungen.

Aus der japanischen Patentanmeldung JP 02 014 776 A 2 ist eine Mehrschichlackierung aus Basislackierung und Klarlackierung bekannt, deren Basislackierung aus einer farb- und/oder effektgebenden Pulverslurry auf der Basis hydroxygruppenhaltiger Acrylatcopolymerisate und blockierter Polyisocyanate hergestellt wird.

Aus dem amerikanischen Patent US 5,379,947 A sind cosolvensfreie farb-und/oder effektgebende Pulverslurries auf der Basis von beispielsweise hydroxylgruppenhaltigen Acrylatcopolymerisaten und blockierten Polyisocyanaten oder glycidylgruppenhaltigen Acrylatcopolymerisaten und langkettigen Alkandisäuren bekannt. Die farb- und/oder effektgebenden Pulverslurries können entweder der Herstellung von Primern, d.h. von Füllerlackierungen oder Steinschlagschutzgrundierungen, oder der Herstellung von Basislackierungen dienen.

Farb- und/oder effektgebende Pulverslurries weisen wie die entsprechenden Pulverlacke gegenüber den konventionellen oder wäßrigen farb- und/oder effektgebenden Naßlacken den Vorteil der völligen oder nahezu völligen Freiheit von organischen Lösemitteln auf. Gegenüber den Pulverlacken besitzen sie den wesentlichen Vorteil, daß sie wie die Naßlacke gelagert, transportiert und appliziert werden können und keine speziellen Vorrichtungen wie Pulverlacke benötigen.

Nach der Applikation und dem Verdampfen des Wassers liegen sie wie die Pulverlacke in einer dünnen Schicht auf dem Substrat vor und werden aufgeschmolzen, so daß sich eine geschlossene Pulverlackschicht bildet. Die Aushärtung erfolgt bei oder nach dem Aufschmelzen der Pulverschicht. Vorzugsweise liegt die Mindesttemperatur für die Aushärtung oberhalb des Schmelzbereichs des Pulvers, sodaß das Aufschmelzen und die Aushärtung voneinander getrennt sind. Dies hat den Vorteil, daß die Pulverschmelze aufgrund ihrer vergleichsweise niedrigen Viskosität gut verläuft, bevor die Aushärtung einsetzt.

Die bisher bekannten farb- und/oder effektgebenden Pulverslurries und die Verfahren zu ihrer Herstellung haben einen wesentlichen Nachteil, der trotz ihrer vorhandenen technischen Vorteile ihrer breiten Verwendung entgegensteht.

So ist eine Farbtoneinstellung und/oder -korrektur über Misch- oder Tönschritte nicht möglich, sondern der Farbton wird alleine durch die ursprüngliche Einwaage festgelegt. Dies bedeutet, daß die farb- und/oder effektgebenden Pigmente das gesamte Herstellverfahren oder einen Teil hiervon durchlaufen müssen, was zu einer Schädigung der Pigmente führen kann. Oder aber die Pigmente werden in einen Pulverslurryklarlack eingemischt, wodurch sich häufig Probleme der Verteilung der farb- und/oder effektgebenden Pigmente in der Pulverslurry ergeben.

Ob dann die fertige farb- und/oder effektgebende Pulverslurry und die hieraus hergestellte Beschichtung letztlich auch den gewünschten Farbton und/oder optischen Effekt aufweist, ist dann von zahlreichen unterschiedlichen Verfahrensparametern und von der jeweiligen Durchführung der Herstellverfahren abhängig, so daß es ausgesprochen schwierig wird, die Ursache von Fehlchargen zu ermitteln. Es versteht sich von selbst, daß die Pulverslurries, die in ihrer Zusammensetzung und ihrem anwendungstechnischen Eigenschaftsprofil, insbesondere was die Farbtöne und/oder die optischen Effekte betrifft, von den vorgegebenen Spezifikationen abweichen, keine spezifikationsgerechte Beschichtungen liefern können.

Außerdem sind die bisherigen Herstellverfahren unwirtschaftlich, weil eine farb-und/oder effektgebende Pulverslurry eines bestimmten Farbtons und/oder optischen Effekts in einer vergleichsweise großen Menge hergestellt werden muß, selbst wenn nur geringe Mengen davon benötigt werden.

Mischsysteme für wäßrige Beschichtungsstoffe (Naßlacke) sind aus den Patentanmeldungen DE 41 10 520 A 1, EP 0 471 972 A 1, EP 0 578 645 A 1, EP 0 614 951 A 1 oder EP 0 698 773 A 1 bekannt.

Sie gestatten die bedarfsgerechte Herstellung wäßriger Beschichtungsstoffe in genau abstimmbaren Farbtönen und optischen Effekten. Diese bekannten Mischsysteme enthalten im wesentlichen wasserfreie farb- und/oder effektgebende Basisfarben und mindestens einen wäßrigen pigmentfreien Mischlack. Diese Mischsysteme und die hieraus hergestellten Beschichtungsstoffe erfüllen aufgrund ihrer Variationsfähigkeit im wesentlichen die stetig steigenden Anforderungen des Marktes. Diese bekannten Mischsysteme haben sich deshalb in der Form von Modulsystemen insbesondere in der Autoreparaturlackierung durchsetzen können, wo sie zur Herstellung von Kleinmengen von farb- und/oder effektgebenden Beschichtungsstoffen eingesetzt werden. Um das Potential dieser Modulsysteme effektiv zu nutzen, werden die stofflichen Zusammensetzungen der farb- und/oder effektgebenden Beschichtungsstoffe mit Hilfe eines Farbmischformel-Systems ermittelt.

Farb- und/oder effektgebende Pulverslurries sind jedoch bisher im Rahmen solcher Modulsysteme nicht eingesetzt worden.

Im Rahmen der vorliegenden Erfindung bezeichnet der Begriff "Modul" ein standardisiertes gebrauchsfertiges Handelsprodukt, dessen anwendungstechnisches Eigenschaftsprofil den Eigenschaftsprofilen der anderen Module genau angepaßt ist und diese ergänzt, so daß die Module insgesamt zu einem Modulsystem kombiniert werden können.

Aufgabe der vorliegenden Erfindung ist es, neue farb- und/oder effektgebende Pulverslurries bereitzustellen, die die Nachteile des Standes der Technik nicht mehr länger aufweisen, sondern deren Zusammensetzung und technisches Eigenschaftsprofil, insbesondere was die Farbtöne und/oder die optischen Effekte betrifft, den jeweiligen vorgegebenen Spezifikationen genau entsprechen. Dabei soll das farb- und/oder effektgebende Potential der Pigmente in den aus den neuen Pulverslurries hergestellten Beschichtungen in vollem Umfang genutzt werden. Außerdem sollen die neuen Pulverslurries in einfacher Weise herstellbar sein.

Außerdem lag der vorliegenden Erfindung die Aufgabe zugrunde, ein neues Verfahren zur Herstellung von farb- und/oder effektgebenden Pulverslurries zu finden, das die Nachteile des Standes der Technik nicht mehr länger aufweist, sondern das es ohne großen Aufwand gestattet, Pulverslurries unterschiedlicher Farbtöne und/oder optischer Effekte herzustellen, wobei die farb- und/oder effektgebenden Pulverslurnes stets in vollem Umfang die vorgegebenen Spezifikation erfüllen. Außerdem soll es das neue Verfahren ermöglichen, einmal hergestellte farb- und/oder effektgebende Pulverslurries, die von den vorgegebenen Spezifikationen abweichen, nachträglich spezifikationsgerecht einzustellen, so daß nur noch wenige oder gar keine Fehlchargen auftreten.

Desweiteren war es die Aufgabe der vorliegenden Erfindung, ein neues Mischsystem für Pulverslurries zu finden, das nicht nur die Herstellung von farb-und/oder effektgebenden Pulverslurries, sondern auch die nachträgliche Einstellung ihrer Farbtöne und/oder ihrer optischen Effekte gestattet.

Nicht zuletzt war es die Aufgabe der vorliegenden Erfindung, ein neues Modulsystem für farb- und/oder effektgebende Pulverslurries zu finden, daß die Herstellung von farb- und/oder effektgebenden Pulverslurries sowie die nachträgliche Einstellung ihrer Farbtöne und/oder ihrer optischen Effekte anhand eines Farbmischformel-Systems gestattet.

Demgemäß wurde die neue farb- und/oder effektgebende Pulverlsurry (A) gefunden, die herstellbar ist, indem man eine von der Pulverslurry (A) verschiedene farb- und/oder effektgebende Pulverslurry (B) oder eine Klarlack-Pulverslurry (B) mit mindestens einer Tönpaste (C) vermischt und die im folgenden als "erfindungsgemäße Pulverslurry (A)" bezeichnet wird.

Außerdem wurde das neue Verfahren zur Herstellung der erfindungsgemäßen Pulverslurry (A) gefunden, bei dem man eine von der erfindungsgemäßen Pulversluny (A) verschiedene farb- und/oder effektgebende Pulverslurry (B) oder eine Klarlack-Pulverslurry (B) mit mindestens einer Tönpaste (C) vermischt, wodurch die erfindungsgemäße Pulverslurry (A) resultiert.

Im folgenden wird das neue Verfahren zur Herstellung der erfindungsgemäßen Pulverslurry (A) als "erfindungsgemäßes Herstellverfahren" bezeichnet.

Desweiteren wurde das neue Mischsystem zur Herstellung oder zur nachträglichen Korrektur des Farbtons und/oder der optischen Effekte der erfindungsgemäßen Pulverslurry (A) gefunden, umfassend
(I) mindestens eine farb- und/oder effektgebende Pulverslurry (B) und/oder mindestens eine Klarlack-Pulverslurry (B),
(II) mindestens zwei mit der Pulverlsurry (B) und untereinander verträglichen, farblich unterschiedlichen Tönpasten und
(III) ein Farbmischformel-System,
das im folgenden als "erfindungsgemäßes Mischsystem" bezeichnet wird.

Weitere erfindungsgemäße Gegenstände ergeben sich aus der Beschreibung.

Die erfindungsgemäße Pulverslurry (A) ist herstellbar, indem man eine von der Pulverslurry (A) verschiedene farb- und/oder effektgebende Pulverslurry (B) oder eine Klarlack-Pulverslurry (B) mit mindestens einer Tönpaste (C) vermischt.

Es ist ein besonderer Vorteil der erfindungsgemäßen Pulverslurry (A) und des erfindungsgemäßen Herstellverfahrens, daß mit Hilfe der Tönpaste (C) die erfindungsgemäße Pulverslurry (A) nachträglich in ihrem Farbton und/oder in ihren optischen Eigenschaften korrigiert werden kann. Somit kann das erfindungsgemäße Herstellverfahren auch als erfindungsgemäßes Tönverfahren durchgeführt werden.

Bei den optischen Effekten handelt es sich insbesondere um Metallic-Effekte und/oder dichroitische optische Effekte (vgl. Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«).

Die erfindungsgemäße Pulverslurry (A) und die farb- und/oder effektgebende Pulverslurry (B) oder die Klarlack-Pulverslurry (B), die die Vorstufe der erfindungsgemäßen Pulverslurry (A) darstellen, sind thermisch und/oder mit aktinischer Strahlung härtbar. Nach der Härtung bilden sie dreidimensional vernetzte, duromere Beschichtungen.

Sind sie thermisch härtbar, können sie thermisch fremdvernetzend oder selbstvernetzend, insbesondere fremdvernetzend, sein. Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind, oder reaktive funktionelle Gruppen, die "mit sich selbst" reagieren können. Als fremdvernetzend werden dagegen solche erfindungsgemäße Pulverslurries bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung wie nahes Infrarot, sichtbares Licht, UV-Strahlung oder Röntgenstrahlung, insbesondere UV-Strahlung, oder Korpuskularstrahlung wie Elektronenstrahlung zu verstehen.

Werden die thermische Härtung und die Härtung mit aktinischer Strahlung zugleich angewandt, spricht man auch von Dual-Cure und Dual-Cure-Pulverslurries.

Die erfindungsgemäße Pulverslurry (A), die farb- und/oder effektgebende Pulverslurry (B) und die Klarlack-Pulverslurry (B) können aber auch thermoplastisch und nicht vernetzend sein. D. h., die Härtung erfolgt hierbei physikalisch durch Koaleszenz der geschmolzenen Pulverslurrypartikel und Verschlaufung der Polymermoleküle.

Erfindungsgemäß sind die thermisch und/oder mit aktinischer Strahlung härtbaren Systeme von Vorteil und werden deshalb besonders bevorzugt angewandt.

Die Herstellung der erfindungsgemäßen Pulverslurry (A) nach dem erfindungsgemäßen Herstellverfahren geht aus von der farb- und/oder effektgebenden Pulverslurry (B) oder der Klarlack-Pulverslurry (B). Das erfindungsgemäße Tönverfahren richtet sich auf die erfindungsgemäße Pulverslurry (A).

Die Grenze zwischen dem erfindungsgemäßen Herstellverfahren und dem erfindungsgemäßen Tönverfahren sind naturgemäß fließend. Als Herstellverfahren wird der Fachmann das Verfahren ansehen, bei dem das Ausgangsprodukt, die Pulverslurry, durch die Zugabe der Tönpasten eine signifikante Veränderung seiner stofflichen Zusammensetzung erfährt. Als Tönverfahren wird der Fachmann dagegen das Verfahren ansehen, bei dem das Ausgangsprodukt durch die Zugabe der Tönpasten lediglich eine geringfügige Veränderung seiner stofflichen Zusammensetzung erfährt, denn es ist gerade Sinn und Zweck von Tönverfahren, die Farbtöne und/oder die optischen Effekte des Produkts mit sowenig wie möglich Tönpaste nachträglich zu korrigieren, damit sich andere wertvolle Eigenschaften der Pulverslurry nicht verändern.

Die erfindungsgemäße Pulverslurry (A), die farb- und/oder oder effektgebende Pulverslurry (B) und die Klarlack-Pulverslurry (B) enthalten mindestens einen feinteiligen dimensionsstabilen Bestandteil, d.h. einen Pulverlack, als disperse Phase und ein wäßriges Medium als kontinuierliche Phase.

Der feinteilige, dimensionsstabile Bestandteil oder Pulverlack der erfindungsgemäßen Pulverslurry (A), der farb- und/oder effektgebenden Pulverslurry (B) und der Klarlack-Pulverslurry (B) kann fest und/oder hochviskos sein. Im Rahmen der vorliegenden Erfindung bedeutet "hochviskos", daß sich die Teilchen unter den üblichen und bekannten Bedingungen der Herstellung, der Lagerung und der Anwendung von Pulverslurries im wesentlichen wie feste Teilchen verhalten. Vorzugsweise ist der Pulverlack fest.

Die einzelnen Teilchen des feinteiligen Bestandteils sind außerdem dimensionsstabil. Im Rahmen der vorliegenden Erfindung bedeutet "dimensionsstabil", daß die Teilchen unter den üblichen und bekannten Bedingungen der Lagerung und der Anwendung von Pulverslurries, wenn überhaupt, nur geringfügig agglomerieren und/oder in kleinere Teilchen zerfallen, sondern auch unter dem Einfluß von Scherkräften im wesentlichen ihre ursprüngliche Form bewahren.

Vorzugsweise liegt der Festkörpergehalt der erfindungsgemäßen Pulverslurry (A), der farb- und/oder effektgebenden Pulverslurry (B) oder der Klarlack-Pulverslurry (B) bei 10 bis 80, bevorzugt 15 bis 75, besonders bevorzugt 20 bis 70, ganz besonders bevorzugt 25 bis 70 und insbesondere 30 bis 65 Gew.-%, jeweils bezogen auf die Pulverslurry (A) oder (B).

Vorzugsweise liegt die mittlere Teilchengröße der feinteiligen, dimensionsstabilen Bestandteile der erfindungsgemäßen Pulverslurry (A), der farb- und/oder effektgebenden Pulverslurry (B) und der Klarlack-Pulverslurry (B) bei 0,8 bis 40 µm, bevorzugt 0,8 bis 20 µm, und besonders bevorzugt bei 2 bis 6 µm. Unter mittlerer Teilchengröße wird der nach der Laserbeugungsmethode ermittelte 50%-Medianwert verstanden, d.h., 50% der Teilchen haben einen Teilchendurchmesser ≤ dem Medianwert und 50% der Teilchen einen Teilchendurchmesser ≥ dem Medianwert.

Die Teilchengröße findet ihre obere Begrenzung dann, wenn die Teilchen aufgrund ihrer Größe beim Einbrennen nicht mehr vollständig verlaufen können und damit der Filmverlauf negativ beeinflußt wird. Als Obergrenze werden 40 µm für sinnvoll erachtet, da ab dieser Teilchengröße mit einer Verstopfung der Spülkanäle der hochempfindlichen Applikationsapparaturen zu rechnen ist.

Die erfindungsgemäße Pulverslurry (A), die farb- und/oder effektgebende Pulverslurry (B) und die Klarlack-Pulverslurry (B) ist vorzugsweise frei von organischen Lösemitteln (Cosolventien). Im Rahmen der vorliegenden Erfindung bedeutet dies, daß sie einen Restgehalt an flüchtigen Lösemitteln von < 1 Gew.%, bevorzugt < 0,5 Gew.-% und besonders bevorzugt < 0,2 Gew.-% hat. Erfindungsgemäß ist es von ganz besonderem Vorteil, wenn der Restgehalt unterhalb der gaschromatographischen Nachweisgrenze liegt.

In einer ersten Ausführungsform, die erfindungsgemäß bevorzugt ist, enthält der feinteilige, dimensionsstabile Bestandteil der erfindungsgemäßen Pulverslurry (A) und der farb- und/oder effektgebenden Pulverslurry (B) mindestens ein farbgebendes und/oder effektgebendes Pigment; d.h., die Gesamtmenge der eingesetzten Pigmente befinden sich in den dispergierten Pulverlackteilchen.

In einer zweiten Ausführungsform, die erfindungsgemäß bevorzugt ist, enthält erfindungsgemäße Pulverslurry (A) und die farb- und/oder effektgebende Pulverslurry (B) mindestens einen pigmentfreien feinverteilten Bestandteil bzw. Pulverlack und mindestens ein pulverförmiges, farbgebendes und/oder effektgebendes Pigment; d.h. alle Pigmente liegen als separate feste Phase vor. Für deren Teilchengröße gilt das vorstehend Gesagte sinngemäß.

In einer dritten Ausführungsform, die erfindungsgemäß bevorzugt ist, enthält die erfindungsgemäße Pulverslurry (A) und die farb- und/oder effektgebende Pulverslurry (B) mindestens einen dispergierten Pulverlack, der einen Teil der eingesetzen Pigmente enthält, wogegen der andere Teil der Pigmente als separate feste Phase vorliegt. Hierbei kann es sich bei dem in den Pulverlackteilchen vorliegenden Anteil um die Hauptmenge, d.h. um mehr als 50% der eingesetzten Pigmente handeln. Es könnnen sich indes auch weniger als 50% in den Pulverlackteilchen befinden. Hinsichtlich der Teilchengrößen gilt das vorstehend Gesagte auch hier sinngemäß.

Welcher Variante der erfindungsgemäßen Pulverslurry (A) oder der farb-und/oder effektgebenden Pulverslurry (B) der Vorzug gegeben wird, richtet sich insbesondere nach der Natur der Pigmente und/oder nach dem Verfahren, mit dem die jeweils verwendete farb- und/oder effektgebende Pulverslurry hergestellt wird. In den meisten Fällen bietet die erste bevorzugte Ausführungsform besondere Vorteile, weswegen sie erfindungsgemäß besonders bevorzugt ist.

Die Pigmente können aus anorganischen oder organischen Verbindungen bestehen. Die erfindungsgemäße Pulverslurry (A) und die farb- und/oder effektgebende Pulverslurry (B) gewährleisten daher aufgrund dieser Vielzahl geeigneter Pigmente eine universelle Einsatzbreite und ermöglichen die Realisierung einer Vielzahl von Farbtönen und optischen Effekten.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist, flüssigkristalline Effektpigmente oder fluoreszierende Pigmente (Tagesleuchtpigmente) wie Bis(azomethin)-Pigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Erfindungsgemäß ist es von Vorteil, wenn die farb- und/oder effektgebende Pulverslurry (B) nur farbgebende Pigmente enthält. Weitere Vorteile resultieren, wenn die farbgebende Pulverslurry (B) einen hellen, insbesondere einen unbunten, Farbton aufweist. Unbunte Farben unterscheiden sich von den bunten durch das Fehlen von Buntton und Buntheit; sie zeigen nur Helligkeit. Zu den unbunten Farben gehören Schwarz und Weiß sowie die dazwischen liegenden bzw. die daraus zu mischenden Grautöne (vgl. Römpp Lexikon Lacke und Druckfarben, Georg Thieme Verlag, Stuttgart, New York, 1998 »Unbuntpunkt«, Seite 590). Besonders bevorzugt wird eine weiße Pulverslurry (B) verwendet.

Darüber hinaus können die farb- und/oder effektgebende Pulverslurry (B) und die erfindungsgemäße Pulverslurry (A) noch elektrisch leitfähige Pigmente, magnetisch abschirmende Pigmente und/oder Metallpulver enthalten.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Die erfindungsgemäße Pulverslurry (A) und die farb- und/oder effektgebende Pulverslurry (B) kann außerdem noch organische und anorganische Füllstoffe enthalten, die wie die Pigmente innerhalb und außerhalb der dispergierten Pulverlackteilchen vorliegen können; das bei den Pigmenten Gesagte gilt hier sinngemäß.

Beispiele geeigneter organischer und anorganischer Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Polyacrylnitrilpulver oder Polyamidpulver. Ergänzend wird auf Römpp Lexikon Lacke und Druckfarben, Georg Thieme Verlag, 1998, Seiten 250 ff., »Füllstoffe«, verwiesen. Weitere Beispiele geeigneter Füllstoffe sind aus der deutschen Patentanmeldung DE 196 06 706 A 1, Spalte 8, Zeilen 30 bis 64, bekannt. Vorzugsweise werden sie in den dort angegebenen Mengen eingesetzt.

Die Pigmente und Füllstoffe können auch in ultrafeiner, nicht deckender Form vorliegen.

Der Anteil der Pigmente, inklusive der Füllstoffe, an der erfindungsgemäßen Pulverslurry (A) und der farb- und/oder effektgebenden Pulverslurry (B) kann sehr breit variieren und richtet sich nach den Erfordernissen des Einzelfalls, insbesondere nach dem einzustellenden optischen Effekt und/oder dem Deckvermögen der jeweils verwendeten Pigmente. Vorzugsweise liegt der Gehalt an Pigmenten bei 0,5 bis 80, bevorzugt 0,8 bis 75, besonders bevorzugt 1,0 bis 70, ganz besonders bevorzugt 1,2 bis 65 und insbesondere 1,3 bis 60 Gew.%, jeweils bezogen auf den Festkörper der Pulverslurry (A) oder (B).

Die erfindungsgemäße Pulverslurry (A) und die farb- und/oder effektgebende Pulverslurry (B) können zusätzlich zu den vorstehend beschriebenen Pigmenten molekulardispers verteilte organische Farbstoffe enthalten.

Diese molekulardispers verteilten Farbstoffe können dabei entweder in den dispergierten Pulverlackteilchen oder in der kontinuierlichen Phase der erfindungsgemäßen Pulverslurry (A) oder der farb- und/oder effektgebenden Pulverslurry, (B) vorhanden sein.

Sie können indes auch in den dispergierten Pulverlackteilchen oder in der kontinuierlichen Phase vorliegen. Hierbei kann es sich bei dem in den Pulverlackteilchen vorliegenden Anteil um die Hauptmenge, d.h. um mehr als 50% der eingesetzten organischen Farbstoffe handeln. Es könnnen sich indes auch weniger als 50% in den Pulverlackteilchen befinden. Die Verteilung der organischen Farbstoffe zwischen den Phasen kann dem thermodynamischen Gleichgewicht entsprechen, das aus der Löslichkeit der organischen Farbstoffe in den Phasen resultiert. Die Verteilung kann aber auch weit von dem thermodynamischen Gleichgewicht entfernt liegen.

Geeignet sind alle organischen Farbstoffe, die in der erfindungsgemäßen Pulverslurry (A) und der farb- und/oder effektgebenden Pulverslurry (B) im vorstehend geschilderten Sinne löslich sind. Gut geeignet sind lichtechte organische Farbstoffe. Besonders gut geeignet sind lichtechte organische Farbstoffe mit einer geringen oder nicht vorhandenen Neigung zur Migration aus den Beschichtungen, die aus der erfindungsgemäßen Pulverslurry (A) hergestellt werden. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der erfindungsgemäßen Pulverslurry (A) und der farb- und/oder effektgebenden Pulverslurry (B) an den molekulardispers verteilten organischen Farbstoffen kann außerordentlich breit variieren und richtet sich in erster Linie nach der Farbe und dem Buntton, der eingestellt werden soll, sowie nach der Menge der vorhandenen Pigmente und/oder Füllstoffe.

Die erfindungsgemäße Pulverslurry (A), die farb- und/oder effektgebende Pulverslurry (B) und die Klarlack-Pulverslurry (B) enthalten als wesentlichen Bestandteil mindestens ein Bindemittel.

Die Bindemittel sind oligomere und polymere Harze. Unter Oligomeren werden Harze verstanden, die mindestens 2 bis 15 Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Erfindungsgemäß ist es von Vorteil, wenn die Mindestfilmbildetemperatur der Bindemittel mindestens 10 °C, bevorzugt mindestens 20, besonders bevorzugt mindestens 25, ganz besonders bevorzugt mindestens 30 und insbesondere mindestens 35 °C beträgt. Die Mindestfilmbildetemperatur kann ermittelt werden, indem die wäßrige Dispersion des Bindemittels mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998 »Mindestfilmbildetemperatur«, Seite 391, verwiesen.

Beispiele für geeignete Bindemittel sind statistisch, alteinierend und/oder blockartig aufgebaute lineare und/oder verzweigte und/oder kammartig aufgebaute (Co)Polymerisate von ethylenisch ungesättigten Monomeren, Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyharnstoffe, Polyamide, Polyimide, Polyester-Polyurethane, Polyether-Polyurethane oder Polyester-Polyether-Polyurethane, insbesondere Epoxidharze.

Die selbstvernetzenden Bindemittel der thermisch härtbaren Pulverslurries (A) und (B) der Dual-Cure-Pulverslurries (A) und (B) enthalten reaktive funktionelle Gruppen, die mit Gruppen ihrer Art oder mit komplementären reaktiven funktionellen Gruppen Vernetzungsreaktionen eingehen können. Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R" stehen für gleiche oder verschiedene aliphatische Reste oder sind miteinander zu einem aliphatischen oder heteroaliphatischen Ring verknüpft.

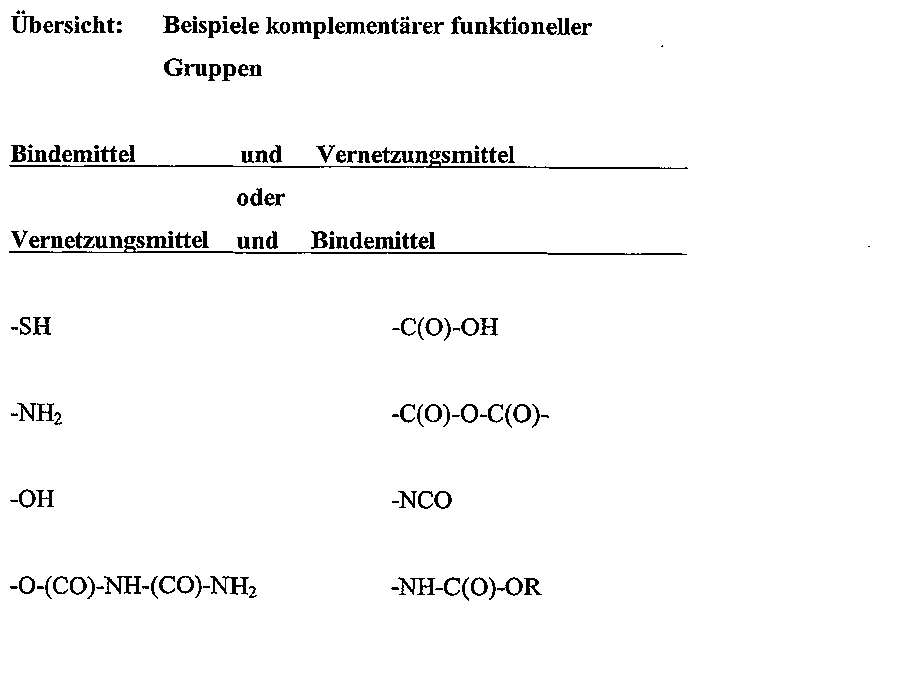

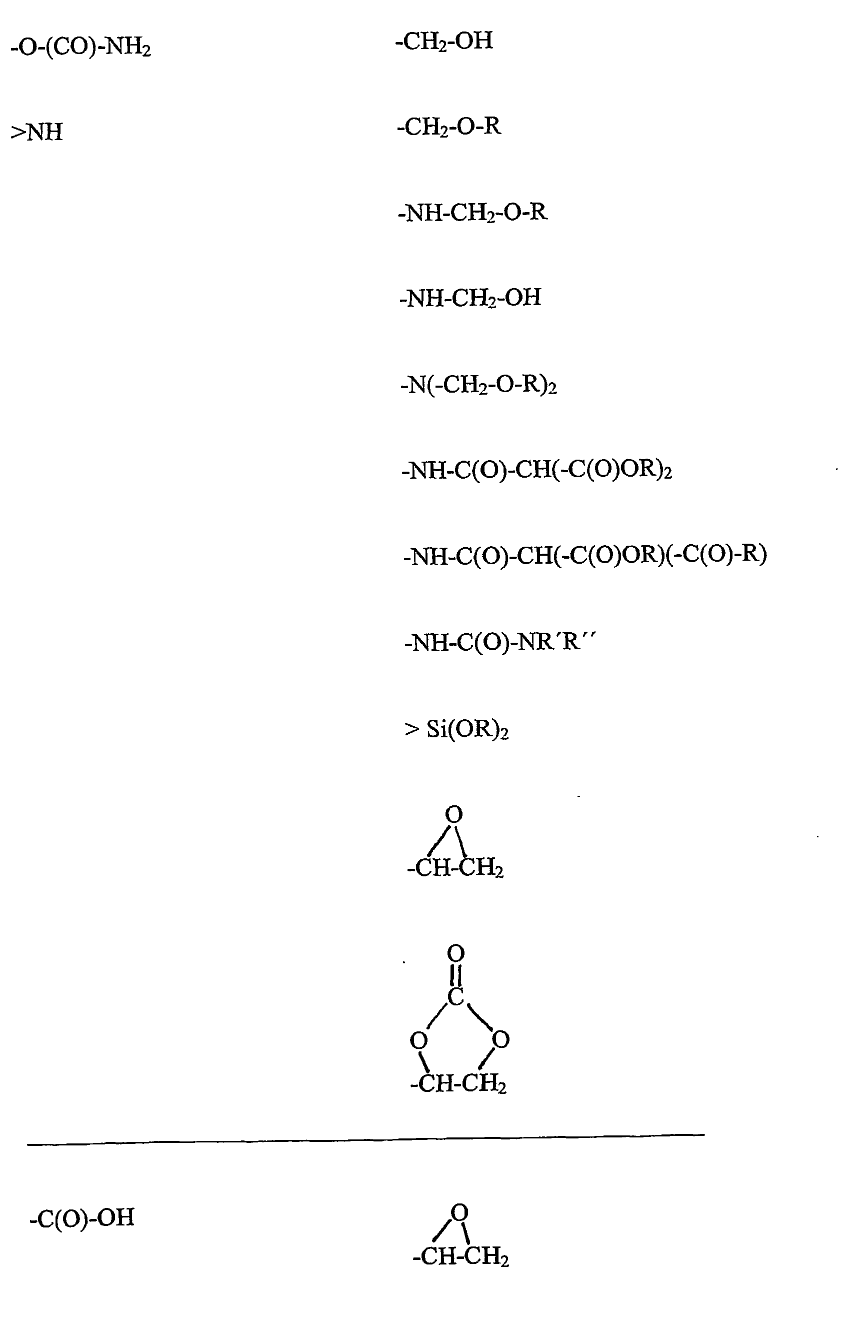

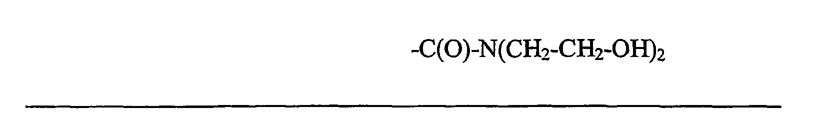

Die Auswahl der jeweiligen komplementären Gruppen richtet sich zum einen danach, daß sie bei der Herstellung, der Lagerung, der Applikation und dem Aufschmelzen der erfindungsgemäßen Pulverslurry (A) keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei der erfindungsgemäßen Pulverslurry (A) Vernetzungstemperaturen von 60 bis 180°C angewandt. Es werden daher vorzugsweise Bindemittel mit Thio-, Hydroxyl-, N-Methylolamino- N-Alkoxymethylamino-, Imino-, Carbamat-, Allophanat-, Epoxy- oder Carboxylgruppen, bevorzugt Hydroxyl- oder Epoxidgruppen, insbesondere Epoxidgruppen, einerseits und vorzugsweise Vernetzungsmittel mit Anhydrid-, Carboxyl-, Epoxid-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxid-, Hydroxy-, beta-Hydroxyalkylamid-, blockierte und unblockierte Isocyanat-, Urethan- oder Alkoxymethylaminogruppen, besonders bevorzugt Epoxid- oder Hydroxylgruppen, insbesondere phenolische Hydroxylgruppen, andererseits angewandt.

Im Falle selbstvernetzender Pulverslurries (A) und (B) enthalten die Bindemittel insbesondere Methylol-, Methylolether- und/oder N-Alkoxymethylaminogruppen.

Komplementäre reaktive funktionelle Gruppen, die für die Verwendung in der erfindungsgemäßen Pulverslurry (A), der farb- und/oder effektgebenden Pulverslurry (B) und der Klarlack-Pulverslurry (B) besonders gut geeignet sind, sind
- Carboxylgruppen einerseits und Epoxidgruppen und/oder beta-Hydroxyalkylamidgruppen andererseits,
- Hydroxylgruppen einerseits und blockierte Isocyanat-, Urethan- oder Alkoxymethylaminogruppen andererseits sowie
- Epoxidgruppen einerseits und phenolische Hydroxylgruppen andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle carboxylgruppenhaltiger Bindemittel die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschreibenen komplementären reaktiven funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen sind
(a1) Monomere, welche mindestens eine Hydroxyl-, Amino-, Alkoxymethylamino-, Carbamat-, Allophanat- oder Iminogruppe pro Molekül tragen wie
- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, - crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat, - monoethacrylat, -monocrotonat, -monomaleinat, -monofumarat oder monoitaconat; Umsetzungsprodukte aus cyclischen Estern, wie z.B. epsilon-Caprolacton und diesen Hydroxyalkyl- oder - cycloalkylestern;
- olefinisch ungesättigte Alkohole wie Allylalkohol;
- Polyole wie Trimethylolpropanmono- oder diallylether oder Pentaerythritmono-, -di- oder triallylether;
- Umsetzungsprodukte aus Acrylsäure und/oder Methacrylsäure mit dem Glycidylester einer in alpha-Stellung verzweigten Monocarbonsäure mit 5 bis 18 C-Atomenje Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomenje Molekül, insbesondere einer Versatic®-Säure, umgesetzt wird;
- Aminoethylacrylat, Aminoethylmethacrylat, Allylamin oder N-Methyliminoethylacrylat;
- N,N-Di(methoxymethyl)aminoethylacrylat oder -methacrylat oder N,N-Di(butoxymethyl)aminopropylacrylat oder -methacrylat;
- (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
- Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3,479,328 A, US 3,674,838 A, US 4,126,747 A, US 4,279,833 A oder US 4,340,497 A beschrieben;
(a2) Monomere, welche mindestens eine Säuregruppe pro Molekül tragen, wie
- Acrylsäure, Methacrylsäure, Ethacrylsäure, Crotonsäure, Maleinsäure, Fumarsäure oder Itaconsäure;
- olefinisch ungesättigte Sulfon- oder Phosphonsäuren oder deren Teilester;
- Maleinsäuremono(meth)acryloyloxyethylester, Bernsteinsäuremo-no(meth)acryloyloxyethylester oder Phthalsäuremo-no(meth)acryloyloxyethylester; oder
- Vinylbenzoesäure (alle Isomere), alpha-Methylvinylbenzoesäure (alle Isomere) oder Vinylbenzsolsulfonsäure (alle Isomere).
(a3) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung der (Meth)Acrylatcopolymerisate, insbesondere der glycidylgruppenhaltigen, verwendet.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane sind 2,2-Dimethylolethyl- oder propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diammodiphenylethersulfonsäure.

Ein Beispiel zur Einführung reaktiver funktioneller Gruppen über polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A, US 4,301,257 A oder US 2,979,514 A bekannt.

Die Bindemittel der Dual-Cure-Pulverslurries (A) und (B) enthalten desweiteren im statistischen Mittel mindestens eine, vorzugsweise mindestens zwei, Gruppe(n) mit mindestens einer mit aktinischer Strahlung aktivierbaren Bindung pro Molekül. Die Bindemittel der mit aktinischer Strahlung härtbaren farb- und/oder effektgebenden Pulverslurries enthalten mindestens zwei dieser Gruppen.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den Dual-Cure-Pulverslurries (A) und (B) auch Gemische aus rein thermisch härtbaren und rein mit aktinischer Strahlung härtbaren Bindemitteln angewandt werden.

Als Bindemittel kommen
- all die in den amerikanischen Patentschriften US 4,268,542 A oder US 5,379,947 A und den Patentanmeldungen DE 27 10 421 A 1, DE 195 40 977 A 1, DE 195 18 392 A 1, DE 196 17 086 A 1, DE 196 13 547 A 1, DE 196 18 657 A 1, DE 196 52 813 A 1, DE 196 17 086 A 1, DE 198 14 471 A 1, DE 198 41 842 A 1 oder DE 198 41 408 A 1, den nicht vorveröffentlichten deutschen Patentanmeldungen DE 199 08 018.6 oder DE 199 08 013.5 oder der europäischen Patentanmeldung EP 0 652 264 A 1 beschriebenen, für die Verwendung in thermisch und/oder mit aktinischer Strahlung härtbaren Pulverklarlack-Slurries vorgesehenen Bindemittel,
- all die in den Patentanmeldungen DE 198 35 296 A 1, DE 197 36 083 A 1 oder DE 198 41 842 A 1 beschriebenen, für die Verwendung in Dual-Cure-Klarlacken vorgesehenen Bindemittel oder
- all die in der deutschen Patentanmeldung DE 42 22 194 A 1, der Produkt-Information der Firma BASF Lacke + Farben AG, "Pulverlacke", 1990, der Firmenschrift von BASF Coatings AG "Pulverlacke, Pulverlacke für industrielle Anwendungen", Januar, 2000, oder dem deutschen Patent DE 196 32 426 C 2 beschriebenen, für die Verwendung in thermisch härtbaren Pulverlacken vorgesehenen Bindemittel in Betracht.

Als zusätzliche Bindemittel für die Dual-Cure-Pulverslurries (A) und (B) oder als die alleinigen Bindemittel für die mit aktinischer Strahlung härtbaren Pulverslurries (A) und (B) kommen die in den den europäischen Patentanmeldungen EP 0 928 800 A1, EP 0 636 669 A1, EP 0 410 242 A1, EP 0 783 534 A 1, EP 0 650 978 A 1, EP 0 650 979 A 1, EP 0 650 985 A1, EP 0 540 884 A 1, EP 0 568 967 A 1, EP 0 054 505 A 1 oder EP 0 002 866 A 1, den deutschen Patentanmeldungen DE 197 09 467 A1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A beschriebenen, zur Verwendung in UVhärtbaren Klarlacken und Pulverklarlacken vorgesehenen Bindemittel in Betracht.

Die Herstellung der Bindemittel weist keine methodischen Besonderheiten auf, sondern erfolgt mit Hilfe der üblichen und bekannten Methoden der Polymerchemie, wie sie beispielsweise in den vorstehend aufgeführten Patentschriften im Detail beschrieben werden.

Weitere Beispiele geeigneter Herstellverfahren für (Meth)Acrylatcopolymerisate werden in der europäischen Patentanmeldung EP 0 767 185 A 1, den deutschen Patenten DE 22 14 650 B 1 oder DE 27 49 576 B 1 und den amerikanischen Patenten US 4,091,048 A 1, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in den Patentanmeldungen DE 1 071 241 B1, EP 0 498 583 A 1 oder DE 198 28 742 A 1 oder in dem Artikel von K. Kataoka in Chemical Engineering Science, Band 50, Heft 9,1995, Seiten 1409 bis 1416, beschrieben werden, in Betracht.

Die Herstellung von Polyestern und Alkydharzen wird beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Resines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die Herstellung von Polyurethanen und/oder acrylierten Polyurethanen wird beispielsweise noch in den Patentanmeldungen EP 0 708 788 A 1, DE 44 01 544 A 1 oder DE 195 34 361 A 1 beschrieben.

Der Gehalt der erfindungsgemäßen Pulverslurry (A), der farb- und/oder effektgebenden Pulverslurry (B) und der Klarlack-Pulverslurry (B) an Bindemitteln kann sehr breit variieren und richtet sich vor allem danach, ob sie thermisch selbstvernetzend sind. In diesem Fall kann er vorzugsweise 20 bis 99,5, bevorzugt 25 bis 99,2, besonders bevorzugt 30 bis 99, ganz besonders bevorzugt 35 bis 98,8 und insbesondere 40 bis 98,7 Gew.%, bezogen auf den Festkörper der Pulverslurry (A) oder (B), betragen. In den anderen Fällen liegt der Bindemittelgehalt vorzugsweise bei 10 bis 80, bevorzugt 15 bis 75, besonders bevorzugt 20 bis 70, ganz besonders bevorzugt 25 bis 65 und insbesondere 30 bis 60 Gew.-%, bezogen auf den Festkörper der Pulverslurry (A) oder (B).

Die thermisch oder thermisch und mit aktinischer Strahlung härtbaren fremdvernetzenden Pulverslurries (A) und (B) enthalten mindestens ein Vernetzungsmittel, das die zu den reaktiven funktionellen Gruppen der Bindemittel komplementären reaktiven funktionellen Gruppen enthält. Der Fachmann kann daher die für eine gegebene erfindungsgemäße Pulverslurry (A), farb- und/oder effektgebende Pulverslurry (B) und Klarlack-Pulverslurry (B) geeigneten Vernetzungsmittel leicht auswählen.

### Beispiele geeigneter Vernetzungsmittel sind

- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A1 oder 198 41 408 A 1 beschrieben werden, insbesondere 1,10-Decandicarbonsäure,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden,
- blockierte Polyisocyanate, wie sie beispielsweise in den Patentschriften US 4,444,954 A1, DE 196 17 086 A1, DE 196 31 269 A1, EP 0 004 571 A 1 oder EP 0 582 051 A 1 beschrieben werden,
- beta-Hydroxyalkylamide wie N,N,N',N'-Tetrakis(2-hydroxyethyl)adipamid oder N,N,N',N'-Tetrakis(2-hydroxypropyl)adipamid,
- Tris(alkoxycarbonylamino)-triazine, wie sie in den Patentschriften US 4,939,213 A 1, US 5,084,541 A, US 5,288,865 A oder EP 0 604 922 A 1 beschrieben werden, und/oder
- phenolische Härter, wie sie beispielsweise in dem deutschen Patent DE 196 32 426 C 2, Seite 5, Zeile 48, bis Seite 6, Zeile 64, beschrieben werden.

Der Gehalt der erfindungsgemäße Pulverslurry (A), der farb- und/oder effektgebenden Pulverslurry (B) und der Klarlack-Pulverslurry (B) an den Vernetzungsmitteln kann ebenfalls sehr breit variieren und richtet sich nach den Erfordernissen des Einzelfalls, insbesondere nach der Anzahl der vorhandenen komplementären reaktiven funktionellen Gruppen in den Bindemitteln und den Vernetzungsmitteln. Vorzugsweise liegt er bei 1 bis 50, bevorzugt 2 bis 45, besonders bevorzugt 3 bis 40, ganz besonders bevorzugt 4 bis 35 und insbeondere 5 bis 30 Gew.-%, bezogen auf den Festkörper der Pulverslurry (A) oder (B).

Außer den vorstehend beschriebenen Pigmenten, Bindemitteln sowie gegebenenfalls Vernetzungsmitteln kann die erfindungsgemäße Pulverslurry (A), die farb- und/oder effektgebende Pulverslurry (B) und die Klarlack-Pulverslurry (B) noch mindestens einen Zusatzstoff enthalten. Dieser kann je nach seinen physikalisch chemischen Eigenschaften und/oder seiner Funktion im wesentlichen in den dispergierten Pulverlackteilchen oder im wesentlichen in der kontinuierlichen Phase vorliegen.

### Beispiele geeigneter Zusatzstoffe sind

- thermisch härtbare Reaktiverdünner wie stellungsisomere Diethyloctandiole oder Hydroxylgruppen enthaltende hyperverzweigte Verbindungen oder Dendrimere;
- mit aktinischer Strahlung härtbare Reaktivverdünner, wie die in Römpp Lexikon Lacke und Druckfarben, Georg Thieme Verlag, Stuttgart, New York, 1998, auf Seite 491 unter dem Stichwort »Reaktivverdünner« beschriebenen;
- Katalysatoren für die Vernetzung wie Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex, wie sie beispielsweise in den US-Patentschriften US 3,477,990 A oder US 3,341,580 A beschrieben werden;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden;
- Antioxidantien wie Hydrazine und Phosphorverbindungen;
- UV-Absorber wie Triazine, Benztriazole oder Oxalanilide;
- Lichtschutzmittel wie HALS-Verbindungen;
- Verlaufmittel;
- Radikalfänger und Polymerisationsinhibitoren wie organische Phosphite oder 2,6 Di-tert-Butylphenol-Derivate;
- Slipadditive;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polyurethane, wie sie beispielsweise in der Patentanmeldung DE 198 35 296 A1 beschrieben werden, insbeondere in Verbindung mit den nachstehend beschriebenen assoziativen Verdickern auf Polyurethanbasis;
- Haftvermittler wie Tricyclodecandimethanol;
- filmbildende Hilfsmittel wie Cellulose-Derivate;
- Flammschutzmittel;
- Entlüftungsmittel wie Diazadicycloundecan oder Benzoin;
- Wasserrückhaltemittel;
- rheologiesteuernde Additive (Verdicker), wie die aus den Patentanmeldungen WO 94/22968, EP 0 276 501 A 1, EP 0 249 201 A 1 oder WO 97/12945 bekannten; vernetzte polymere Milcroteilchen, wie sie beispielsweise in der EP 0 008 127 A 1 offenbart sind; anorganische Schichtsilikate wie Aluminium-Magnesium-Silikate, Natrium-Magnesium-und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A 1 zu Einstellung eines strukturviskosen Verhaltens beschrieben werden, oder die Kombination von assoziativen Verdickern auf Polyurethanbasis und Netzmitteln auf Polyurethanbasis, wie sie in der deutschen Patentanmeldung DE 198 35 296 A 1 im Detail beschrieben wird;

Weitere Beispiele geeigneter Zusatzstoffe werden in dem Lehrbuch "Lackadditive" von Johan Bieleman, Wiley-VCH, Weinheim, New York, 1998, beschrieben. Sie werden in den üblichen und bekannten Mengen angewandt.

Die Herstellung der erfindungsgemäß zu verwendenden farb- und/oder effektgebenden Pulverslurry (B) und der Klarlack-Pulverslurry (B) aus den vorstehend beschriebenen Bestandteilen weisen ebenfalls keine Besonderheiten auf, sondern erfolgt im wesentlichen wie in den Patentanmeldungen DE 195 40 977 A1, DE 195 18 392 A 1, DE 196 17 086 A1, DE-A-196 13 547, DE 196 18 657 A1, DE 196 52 813 A1, DE 196 17 086 A1, DE 198 14 471 A 1, DE 198 41 842 A 1 oder DE 198 41 408 A 1 im Detail beschrieben, nur daß bei der Herstellung der farb- und/oder effektgebenden Pulverslurry (B) noch Pigmente mitverarbeitet werden.

In einer ersten bevorzugten Variante der Herstellung wird von einem farb-und/oder effektgebenden Pulverlack oder Pulverklarlack ausgegangen, die wie in der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, beschrieben, durch Homogenisieren und Dispergieren, beispielsweise mittels eines Extruders oder Schneckenkneters, und Vermahlen hergestellt werden. Nach Herstellung der Pulverlacke werden diese durch weiteres Vermahlen und ggf. durch Sichten und Sieben für die Dispergierung vorbereitet.

Aus den Pulverlacken können anschließend durch Naßvermahlung oder durch Einrühren der trocken vermahlenen Pulverlack die farb- und/oder effektgebende Pulverslurry (B) und die Klarlack-Pulverslurry (B) hergestellt werden. Besonders bevorzugt wird die Naßvermahlung.

In einer weiteren bevorzugten Variante werden die vorstehend beschriebenen Bestandteile in einem organischen Lösemittel emulgiert, wodurch eine Emulsion vom Typ Öl-in-Wasser resultiert, hiernach wird das organische Lösemittel entfernt, wodurch sich die emulgierten Tröpfchen verfestigen und die erfindungsgemäß zu verwendende farb- und/oder effektgebende Pulverslurry (B) oder die Klarlack-Pulverslurry (B) resultieren. Ggf. können sie noch naßvermahlen werden, um die Filtrierbarkeit zu verbessern.

In einer dritten bevorzugten Variante wird eine flüssige Schmelze der vorstehend beschriebenen Bestandteile gegebenenfalls zusammen mit den nicht aufgeschmolzenen Pigmenten in eine Emulgiervorrichtung vorzugsweise unter Zusatz von Wasser und Stabilisatoren gegeben, die erhaltene Emulsion abgekühlt und filtriert, wodurch die erfmdungsgemäß zu verwendende Klarlack-Pulverslurry (B) und farb- und/oder effektgebende Pulverslurry (B) resultieren. Um eine hohe Mischgüte erzielen, ist es wesentlich, die Mischung lösemittelfrei in der Schmelze durchzuführen. Demgemäß werden die polymeren Bestandteile als viskose Harzschmelzen in die Dispergieraggregate eingespeist.

Die erfindungsgemäß zu verwendende farb- und/oder effektgebende Pulverslurry (B) und die erfindungsgemäß zu verwendende Klarlack-Pulverslurry (B) dienen der Herstellung der erfindungsgemäßen Pulverslurry (A) nach dem erfindungsgemäßen Verfahren. Dazu werden die farb-und/oder effehrtgebende Pulverslurry (B), insbesondere die farbgebende Pulverslurry (B), oder die Klarlack-Pulverslurry (B) mit mindestens einer Tönpaste (C) vermischt. Das Mischungsverhältnis kann dabei sehr breit variieren und richtet sich nach den Erfordernissen des Einzelfalls, insbesondere nach dem Farbton, dem man einstellen will, und dessen Intensität. Vorzugsweise liegt das Gewichtsverhältnis von Pulverslurry (B) zu Tönpaste (C) bei (B) : (C) = 1000 : 1 bis 10 : 1, bevorzugt 500 : 1 bis 11 : 1, besonders bevorzugt 200 : 1 bis 12 : 1 und insbesondere 100 : 1 bis 13 : 1.

Die stoffliche Zusammensetzung der Tönpasten (C) kann ebenfalls breit variieren. Wesentlich ist, daß sie mit der farb- und/oder effektgebenden Pulverslurry (B) und der Klarlack-Pulverslurry (B) verträglich sind, so daß es nicht zu Glanzschleiern in den und nicht zum Ausschwitzen oder Ausschwimmen von Bestandteilen der Tönpaste (C) aus den Beschichtungen, die aus der erfindungsgemäßen Pulverslurry (A) hergestellt worden sind, kommt.

Vorzugsweise werden wäßrige Tönpasten (C) verwendet. Die Tönpasten können untergeordnete Mengen an lacktypischen organischen Lösemitteln enthalten, wobei unter untergeordneten Mengen solche Mengen verstanden werden, die die wäßrige Natur der Tönpasten (C) nicht zerstören. Beispiele geeigneter organische Lösemittel sind Alkylenglykole wie Propylenglykol.

Die wäßrigen Tönpasten (C) enthalten mindestens eines der vorstehend beschriebenen farb- und/oder effektgebenden Pigmente. Der Gehalt an Pigmenten kann sehr breit variieren und richtet sich zum einen nach ihren physikalischen Eigenschaften wie Dispergierbarkeit und Deckvermögen. Vorzugsweise werden die Pigmente in einer Menge von 10 bis 80, bevorzugt 12 bis 75, besonders bevorzugt 14 bis 70 und insbesondere 16 bis 65 Gew.-%, jeweils bezogen auf die Tönpaste (C), eingesetzt.

Um eine gute Verteilung der Pigmente in den wäßrigen Tönpasten (C) zu erzielen, enthalten diese mindestens ein Netzmittel und/oder einen Emulgator. Geeignete Netzmittel und Emulgatoren sind die vorstehend beschriebenen.

Vorzugsweise enthalten die wäßrigen Tönpasten (C) mindestens ein, insbesondere ein, übliches und bekanntes wasserverdünnbares (Meth)Acrylatcopolymerisat und/oder einen Verdicker auf Schichtsilikatbasis und/oder Polyurethanbasis.

Geeignete Verdicker sind die vorstehend beschriebenen.

Beispiele geeigneter (Meth)Acrylatcopolymerisate werden in der deutschen Patentanmeldung DE 198 55 146 A1 beschrieben.

Darüber hinaus können die wäßrigen Tönpasten (C) noch mindestens einen der vorstehend beschriebenen Zusatzstoffe enthalten.

Die Herstellung der erfindungsgemäß zu verwendenden Tönpasten (C) bietet keine methodischen Besonderheiten, sondern erfolgt nach den üblichen und bekannten Methoden der Herstellung von Tönpasten durch Vermischen ihrer Bestandteile in geeigneten Mischaggregaten wie Rührkessel, Dissolver, Ultraturrax oder Extruder. Vorzugsweise wird die gewünschte Feinheit der Pigmente durch Vermahlen der Tönpaste (C) beispielsweise in einer Rührwerksmühle eingestellt.

Auch das Vermischen der Tönpasten (C) mit den erfindungsgemäß zu verwendenden farb-und/oder effektgebenden Pulverslurries (B) oder den Klarlack-Pulverslurries (B) bietet keine methodischen Besonderheiten, sondern erfolgt nach den vorstehend beschriebenen Verfahren, wobei die vorstehend beschriebenen Mischaggregate verwendet werden. Das Vermischen kann aber auch per Hand erfolgen, insbesondere bei der Herstellung von Kleinstmengen.

Für das erfindungsgemäße Tönverfahren, bei dem die Tönpasten (C) mit den erfindungsgemäßen Pulverslurries (A) vermischt werden, gilt das vorstehend Gesagte sinngemäß.

Durch das erfindungsgemäße Herstellverfahren und das erfindungsgemäße Tönverfahren ist von vornherein oder nachträglich eine besonders exakte Einstellung der Farbtöne und/oder der optischen Effekte der erfindungsgemäßen Pulverslurries (A) ohne großen Aufwand möglich. Dadurch können in einfacher Weise erfindungsgemäße Pulverslurries (A) der unterschiedlichsten Buntheit und/oder Intensität der optischen Effekte nach Bedarf in den jeweils erforderlichen Mengen hergestellt werden. Deswegen kann auch auf die Herstellung von große Mengen von erfindungsgemäßen Pulverslurries (A) mit bestimmten Farbtönen und/oder optischen Effekte verzichtet werden, wodurch weniger oder gar keine Entsorgungsprobleme mehr auftreten.

Ein weiterer Vorteil des erfindungsgemäßen Herstellverfahrens und Tönverfahrens ist, daß auch überschüssige, nicht mehr verwendbare farb-und/oder effektgebende Pulverslurries und Pulverklarlacke oder Fehlchargen noch immer für die Herstellung der erfindungsgemäßen Pulverslurries (A) verwendet werden können und nicht entsorgt werden müssen.

Es ist ganz wesentlicher Vorteil der erfindungsgemäßen Pulverslurry (A) sowie des erfindungsgemäßen Herstellverfahrens und Tönverfahrens, daß sie mit Hilfe eines Mischsystems hergestellt bzw. durchgeführt werden können.

Das erfindungsgemäße Mischsystem enthält mindestens eine, insbesondere eine, farb- und/oder effektgebende Pulverslurry (B) und/oder mindestens eine, insbesondere eine, Klarlack-Pulverslurry (B). Vorzugsweise wird eine Klarlack-Pulverslurry (B) oder eine farbgebende Pulverslurry (B) verwendet, die bevorzugt einen hellen, insbesondere unbunten, Farbton aufweist. Besonders bevorzugt wird eine weiße Pulverslurry (B) eingesetzt.

Das erfindungsgemäße Mischsystem enthält desweiteren mindestens zwei Tönpasten (C), die mit der farb- und/oder effektgebenden Pulverslurry (B) und der Klarlack-Pulverslurry (B) und untereinander im vorstehend beschriebenen Sinne verträglich sind.

Grundprinzip des erfindungsgemäßen Mischsystems ist, daß eine sehr große Anzahl, zum Beispiel mehrere tausend, von erfindungs gemäßen Pulverslurries (A) mit unterschiedlichen Farbtönen und/oder optischen Effekten mit einer begrenzten Anzahl von farb-und/oder effektgebenden Pulverslurries (B) oder Klarlack-Pulverslurries (B) einerseits und Tönpasten (C) andererseits hergestellt werden können. Überraschenderweise reichen dabei eine Klarlack-Pulverslurry (B) oder 1 bis 10 unterschiedliche farb- und/oder effektgebende Pulverslurries (B) und 10 bis 50 unterschiedliche Tönpasten (C) aus, um beispielsweise so gut wie alle bei der Automobilserienlackierung oder -reparaturlackierung gängigen Farbtöne und/oder optischen Effekte nachzustellen.

Das erfindungsgemäße Mischsystem wird vorzugsweise in der Form eines Modulsystems gehandelt und angewandt.

Das erfmdungsgemäße Modulsystem umfaßt einen Pulverslurry-Modul (I), enthaltend mindestens eine der vorstehend beschriebenen farb-und/oder effektgebenden Pulverslurries (B) und/oder mindestens eine der vorstehend beschriebenen Klarlack-Pulverslurries (B). Außerdem enthält das erfindungsgemäße Modulsystem mindestens zwei unterschiedliche Tönmodule (II), die jeweils eine Tönpaste (C) enthalten.

Eine wesentliche funktionale Komponente (III) des erfindungsgemäßen Modulsystems ist das Farbmischformel-System. Dieses wird auf der Basis der unterschiedlich farb- und/oder effektgebenden erfindungsgemäßen Pulverslurries (A) und/oder (B) oder der Klarlack-Pulverslurries (B) sowie der unterschiedlich farb- und/oder effektgebenden Tönpasten (C) erarbeitet und in der Form von Rezepturen und von standardisierten Proben der aus den einzelnen erfindungsgemäßen Pulverslurries (A) hergestellten Beschichtungen dokumentiert.

Die erfindungsgemäßen Pulverslurries (A), insbesondere die nach dem erfindungsgemäßen Herstellverfahren hergestellten, die nach dem erfindungsgemäßen Tönverfahren nachträglich eingestellten und/oder die mit Hilfe des erfindungsgemäßen Mischsystems oder Modulsystems hergestellten oder getönten, sind hervorragend für alle Verwendungszwecke geeignet, für die farb- und/oder effektgebende Pulverslurries üblicherweise verwendet werden. Insbesondere sind sie für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die Imprägnierung und/oder Beschichtung elektrotechnischer Bauteile, geeignet.

Hierbei kommen sie vor allem für die Herstellung von farb- und/oder effektgebenden Grundierungen, Füllern, farb- und/oder effektgebenden Unidecklackierungen oder Basislackierungen oder Kombinationseffektschichten, die mehrere dieser Funktionen übernehmen können, für die grundierten und ungrundierten Substrate, wie sie auf den vorstehend genannten technischen Gebieten üblicherweise eingesetzt werden, in Betracht.

Sie können problemlos appliziert werden. Die applizierten Schichten weisen einen hervorragenden Verlauf auf. Für ihre Härtung können alle üblichen und bekannten Vorrichtungen und Verfahren der thermischen Härtung und/oder der Härtung mit aktinischer Strahlung angewandt werden. Die resultierenden Beschichtungen weisen brilliante Farben und/oder intensive optische Effekte auf und sind frei von Oberflächenstörungen, Glanzschleiern. Sie zeigen kein Ausschwimmen oder Ausschwitzen von Bestandteilen.

### Beispiele

### Herstellbeispiele 1 bis 4

### Die Herstellung von wäßrigen Tönpasten (C)

### Herstellbeispiel 1: Schwarze Tönpaste

Es wurde eine schwarze Tönpaste durch Vermischen der folgenden Bestandteile in der angegebenen Reihenfolge hergestellt:
- 10,0: Gewichtsteile eines handelsüblichen Schichtsilikats auf Basis eines organisch modifizierten Smektits (Bentone® EW-Paste, 10prozentig, der Firma Rheox, Belgien),
- 10,0: Gewichtsteile eines handelsüblichen Netzmittels (Alkylphenolethoxylat, Lutensol® AP 9, BASF AG),
- 5,8: Gewichtsteile eines handelsüblichen Emulgators (Pigmentverteiler MD 20, BASF AG),
- 3,5: Gewichtsteile deionisiertes Wasser,
- 15,1: Gewichtsteile Propylenglykol,
- 0,1: Gewichtsteile einer handelsüblichen Lösung eines Isothiazolinon-Derivats (Euxyl® K 100, Firma Schülke & Mayr, Norderstedt),
- 0,5: Gewichtsteile eines handelsüblichen Verdickers (Mischung von flüssigen Kohlenwasserstoffen mit hydrophober Kieselsäure, einem einwertigen Alkohol und Emulgatoren, Agitan® 703 N, Firma Münzing Chemie, Heilbronn) und
- 55,0: Gewichtsteile Sicomix® Schwarz 00-6060 (Mischung aus Flammruß und Bariumsulfat, BASF AG).

### Herstellbeispiel 2: Blaue Tönpaste

Es wurde eine blaue Tönpaste durch Vermischen der folgenden Bestandteile in der angegebenen Reihenfolge hergestellt.
- 15,0: Gewichtsteile eines wasserverdünnbaren Methacrylatcopolymerisats (Parocryl® AW 51.6, Firma BASF Coatings AG),
- 21,4: Gewichtsteile deionisiertes Wasser,
- 13,0: Gewichtsteile eines handelsüblichen Netzmittels (Disperse-Ayd® W 22, 35prozentig in Wasser/Propylenglykol, Firma Krahn Chemie),
- 5,0: Gewichtsteile Sojalecithin (Firma Hanf und Nelles, Düsseldorf),
- 2,0: Gewichtsteile deionisiertes Wasser,
- 0,5: Gewichtsteile eines handelsüblichen Zusatzstoffes (Agitan® E 256, wäßrige Emulsion von organisch modifizierten Polysiloxanen, Firma Münzing Chemie, Heilbronn),
- 5,0: Gewichtsteile Propylenglykol,
- 0,1: Gewichtsteile einer handelsüblichen Lösung eines Isothiazolinon-Derivats (Euxyl® K 100, Firma Schülke & Mayr, Norderstedt) und
- 38,0: Gewichtsteile Heliogen-Blau L 7101 F (Kupferphthalocyanin, BASF AG).

### Herstellbeispiel 3: Orangefarbene Tönpaste

Die orangefarbene Tönpaste wurde durch das Vermischen der folgenden Bestandteile in der angegebenen Reihenfolge hergestellt:
- 20,0: Gewichtsteile eines wasserverdünnbaren Methacrylatcopolymerisats (Parocryl® AW 51.6, Firma BASF Coatings AG),
- 26,8: Gewichtsteile deionisiertes Wasser,
- 13,0: Gewichtsteile eines handelsüblichen Netzmittels (Disperse-Ayd® W 22, 35prozentig in Wasser/Propylenglykol, Firma Krahn Chemie),
- 2,0: Gewichtsteile eines handelsüblichen Emulgators (Pigmentverteiler MD 20, BASF AG),
- 2,1: Gewichtsteile deionisiertes Wasser,
- 1,0: Gewichtsteile eines handelsüblichen Zusatzstoffes (Agitan® E 256, wäßrige Emulsion von organisch modifizierten Polysilöxanen, Firma Münzing Chemie, Heilbronn),
- 5,0: Gewichtsteile Propylenglykol,
- 0,1: Gewichtsteile einer handelsüblichen Lösung eines Isothiazolinon-Derivats (Euxyl® K 100, Firma Schülke & Mayr, Norderstedt) und
- 30,0: Gewichtsteile Paliotol-Orange L 2930 HD (Azopigment, Firma BASF AG).

### Herstellbeispiel 4: Gelbe Tönpaste

Die gelbe Tönpaste wurde durch das Vermischen der folgenden Bestandteile in der angegebenen Reihenfolge hergestellt:
- 22,0: Gewichtsteile eines wasserverdünnbaren Methacrylatcopolymerisats (Parocryl® AW 51.6, Firma BASF Coatings AG),
- 19,3: Gewichtsteile deionisiertes Wasser,
- 13,0: Gewichtsteile eines handelsüblichen Netzmittels (Disperse-Ayd® W 22, 35prozentig in Wasser/Propylenglykol, Firma Krahn Chemie),
- 2,1: Gewichtsteile eines handelsüblichen Emulgators (Pigmentverteiler MD 20, BASF AG),
- 1,0: Gewichtsteile eines handelsüblichen Zusatzstoffes (Agitan® E 256, wäßrige Emulsion von organisch modifizierten Polysiloxanen, Firma Münzing Chemie, Heilbronn),
- 5,0: Gewichtsteile Propylenglykol,
- 0,1: Gewichtsteile einer handelsüblichen Lösung eines Isothiazolinon-Derivats (Euxyl® K 100, Firma Schülke & Mayr, Norderstedt),
- 0,5: Gewichtsteile eines handelsüblichen Verdickers (Borchigel® L 75 N, 54prozentig in Wasser, nicht ionischer Verdicker auf Polyurethanbasis) und
- 37,0: Gewichtsteile Sico-Gelb L 1252 HD (Azopigment, Firma BASF AG).

### Herstellbeispiel 5

### Die Herstellung einer Klarlack-Pulverslurry (B)

Für die Beispiele 1 bis 3 wurde eine Klarlack-Pulverslurry (B) hergestellt. Dazu wurde zunächst ein Pulverlack aus 46,9 Gewichtsteilen eines festen Epoxidharzes (DOW® E.R. 642 U-20, 100%ig, der Firma Dow, Schwalbach) und 20,85 Gewichtsteilen eines phenolischen Härters, hergestellt aus einem Epoxidharz und einem Überschuß an Bisphenol A (DOW® E.H. 82, 100%ig, der Firma Dow, Schwalbach) durch Extrusion der Bestandteile und Vermahlen der resultierenden Mischung hergestellt.

Die Klarlack-Pulverslurry (B) wurde aus den folgenden Bestandteilen durch Vermischen hergestellt:
- 62,48: Gewichtsteile deionisiertes Wasser,
- 0,5: Gewichtsteile Acrysol® RM-8, (nicht ionischer Verdicker auf der Basis eines wasserlöslich Polyurethans der Firma Rohm und Haas; 35prozentig),
- 1,0: Gewichtsteile Disperse Ayd® W-22 (anionisch/nicht ionisches Netzmittel der Firma Krahn Chemie, Hamburg; 35prozentig in Wasser/Propylenglykol),
- 0,02: Gewichtsteile Triton® X 100 (nicht ionisches Tensid, Octylphenoxypolyethoxyethanaol der Firma Union Carbide),
- 36,0: Gewichtsteile des Pulverklarlacks und
- 0,05: Gewichtsteile Byk® 345 (polyethermodifiziertes Polydimethylsiloxan der Firma Byk Chemie).

### Herstellbeispiel 6

### Die Herstellung einer weißen Pulverslurry (B)

Für die Beispiele 4 bis 8 wurde eine weiße Pulverslurry (B) hergestellt. Dazu wurde zunächst ein weißer Pulverlack aus 46,9 Gewichtsteilen eines festen Epoxidharzes (DOW® E.R. 642 U-20, 100%ig, der Firma Dow, Schwalbach), 20,85 Gewichtsteilen eines phenolischen Härters, hergestellt aus einem Epoxidharz und einem Überschuß an Bisphenol A (DOW® E.H. 82, 100%ig, der Firma Dow, Schwalbach) und 31,25 Gewichtsteilen Titan Rutil 2310 (handelsübliches Titandioxidpigment der Firma Kronos International) durch Extrusion der Bestandteile und Vermahlen der resultierenden Mischung hergestellt.

Die weiße Pulverslurry (B) wurde aus den folgenden Bestandteilen durch Vermischen hergestellt:
- 62,48: Gewichtsteile deionisiertes Wasser,
- 0,5: Gewichtsteile Acrysol® RM-8, (nicht ionischer Verdicker auf der Basis eines wasserlöslich Polyurethans der Firma Rohm und Haas; 35prozentig),
- 1,0: Gewichtsteile Disperse Ayd® W-22 (anionisch/nicht ionisches Netzmittel der Firma Krahn Chemie, Hamburg; 35prozentig in Wasser/Propylenglykol),
- 0,02: Gewichtsteile Triton® X 100 (nicht ionisches Tensid, Octylphenoxypolyethoxyethanaol der Firma Union Carbide),
- 36,0: Gewichtsteile des weißen Pulverlacks und
- 0,05: Gewichtsteile Byk® 345 (polyethermodifiziertes Polydimethylsiloxan der Firma Byk Chemie).

### Beispiele 1 bis 8

### Die Herstellung erfindungsgemäßer Pulverslurries (A)

Die erfindungsgemäßen Pulverslurries (A) der Beispiele 1 bis 8 wurden durch Vermischen der bei den einzelnen Beispielen angegebenen klaren oder farbgebenden Pulverslurries (B) und den geeigneten Tönpasten (C) hergestellt.

### Beispiel 1: Schwarze Pulverslurry (A)

- 95,9: Gewichtsteile der Klarlack-Pulverslurry (B) gemäß Herstellbeispiel 5 und
- 4,1: Gewichtsteile der schwarzen Tönpaste (C) des Herstellbeispiels 1

### Beispiel 2: Gelbe Pulverslurry (A)

- 95,0: Gewichtsteile der Klarlack-Pulverslurry (B) gemäß Herstellbeispiel 5,
- 4,7: Gewichtsteile der gelbe Tönpaste (C) des Herstellbeispiels 4 und
- 0,3: Gewichtsteile der schwarzen Tönpaste (C) des Herstellbeispiels 1

### Beispiel 3: Orangefarbene Pulverslurry (A)

- 94,8: Gewichtsteile der Klarlack-Pulverslurry (B) gemäß Herstellbeispiel 5 und
- 5,2: Gewichtsteile der orangefarbenen Tönpaste (C) des Herstellbeispiels 2

### Beispiel 4: Beigefarbene Pulverslurry (A)

- 97,5: Gewichtsteile der weißen Pulverslurry (B) gemäß Herstellbeispiel 6,
- 2,0: Gewichtsteile der gelben Tönpaste gemäß Herstellbeispiel 4 und
- 0,5: Gewichtsteile der schwarzen Tönpaste gemäß Herstellbeispiel 1

### Beispiel 5: Hellbeige Pulverslurry (A)

- 97,1: Gewichtsteile der weißen Pulverslurry (B) gemäß Herstellbeispiel 6,
- 2,7: Gewichtsteile der gelben Tönpaste (C) des Herstellbeispiels 4 und
- 0,2: Gewichtsteile der schwarzen Tönpaste (C) des Herstellbeispiels 1

### Beispiel 6: Hellgelbe Pulverslurry (A)

- 94,1: Gewichtsteile der weißen Pulverslurry (B) gemäß Herstellbeispiel 6,
- 5,5: Gewichtsteile der gelben Tönpaste (C) des Herstellbeispiels 4 und
- 0,4: Gewichtsteile der orangefarbenen Tönpaste (C) des Herstellbeispiels

### Beispiel 7: Hellblaue Pulverslurry (A)

- 97,1: Gewichtsteile der weißen Pulverslurry (B) gemäß Herstellbeispiel 6,
- 2,7: Gewichtsteile der blauen Tönpaste (C) des Herstellbeispiels 2 und
- 0,2: Gewichtsteile der schwarzen Tönpaste (C) des Herstellbeispiels 1

### Beispiel 8: Hellgraue Pulverslurry (A)

- 98,2: Gewichtsteile der weißen Pulverslurry (B) gemäß Herstellbeispiel 6
- 1,8: Gewichtsteile der schwarzen Tönpaste (C) des Herstellbeispiels 1

Die erfindungsgemäßen Pulverslurries (A) der Beispiele 1 bis 8 waren lagerstabil und zeigten kein Absetzen von festen Partikeln oder Aufschwimmen von sonstigen Bestandteilen. Die erfindungsgemäßen Pulverslurries (A) wurden auf Stahltafeln, die mit einer üblichen und bekannten Elektrotauchlackierung beschichtet worden waren, appliziert. Der Verlauf der resultierenden Pulverslunyschichten war hervorragend. Nach dem Einbrennen resultierten schwarze, gelbe, orangefarbene, beige, hellbeige, hellgelbe, hellblaue und hellgraue Beschichtungen, die den vorgegebenen Spezifikationen entsprachen und frei von Oberflächenstörungen und Glanzschleiern waren und kein Ausschwimmen oder Ausschwitzen von Bestandteilen zeigten. Die Reproduzierbarkeit der Farbtöne war hervorragend.

## Patentansprüche

1. Farb- und/oder effektgebende Pulverlsurry (A), herstellbar, indem man eine von der Pulverslurry (A) verschiedene farb- und/oder effektgebende Pulverslurry (B) oder eine Klarlack-Pulverslurry (B) mit mindestens einer Tönpaste (C) vermischt.

2. Farb- und/oder effektgebende Pulverlsurry (A) nach Anspruch 1, **dadurch gekennzeichnet, daß** man sie mit mindestens einer Tönpaste (C) nachträglich in ihrem Farbton und/oder in ihren optischen Effekten korrigiert.

3. Farb- und/oder effektgebende Pulverlsurry (A) nach Anspruch 1 oder 2, **dadurch gekennzeichnet, daß** man die farb- und/oder effektgebende Pulverlsurry (B) oder die Klarlack-Pulverslurry (B) und die Tönpaste oder Tönpasten (C) und/oder die Pulverslurry (A) und die Tönpaste oder Tönpasten (C) im Gewichtsverhältnis von (B) : (C) oder (A) : (C) = 1000 : 1 bis 10 : 1 miteinander vermischt.

4. Farb- und/oder effektgebende Pulverlsurry (A) nach einem der Ansprüche 1 bis 3, **dadurch gekennzeichnet, daß** man eine farbgebende Pulverslurry (B) verwendet.

5. Farb- und/oder effektgebende Pulverslurry (A) nach Anspruch 4, **dadurch gekennzeichnet, daß** man eine farbgebende Pulverslurry (B) mit einem hellen Farbton verwendet.

6. Farb- und/oder effektgebende Pulverlsurry (A) nach Anspruch 5, **dadurch gekennzeichnet, daß** man eine farbgebende Pulverslurry (B) mit einem unbunten Farbton verwendet.

7. Farb- und/oder effektgebende Pulverlsurry (A) nach Anspruch 6, **dadurch gekennzeichnet, daß** man eine weiße Pulverslurry (B) verwendet.

8. Farb- und/oder effektgebende Pulverlsurry (A) nach einem der Ansprüche 1 bis 7, **dadurch gekennzeichet, daß** die Tönpaste (C) mindestens ein farb-und/oder effektgebendes Pigment und mindestens ein Netzmittel und/oder einen Emulgator enthält.

9. Farb- und/oder effektgebende Pulverlsurry (A) nach Anspruch 8, **dadurch gekennzeichnet, daß** die Tönpaste (C) mindestens ein wasserverdünnbares (Meth)Acrylatcpolymerisat und/oder einen Verdicker auf Schichtsilikatbasis und/oder Polyurethanbasis enthält.

10. Verfahren zur Herstellung einer farb- und/oder effektgebenden Pulverslurry (A) gemäß einem der Ansprüche 1 bis 9, **dadurch gekennzeichnet, daß** man eine von der Pulverslurry (A) verschiedene farb-und/oder effektgebende Pulverslurry (B) oder eine Pulverklarlack-Slurry (B) mit mindestens einer Tönpaste (C) vermischt, wodurch die Pulverslurry (A) resultiert.

11. Verfahren zur Herstellung einer farb- und/oder effektgebenden Pulverslurry (A) nach Anspruch 10, daß man sie mit mindestens einer Tönpaste (C) nachträglich in ihrem Farbton und/oder in ihren optischen Effekten korrigiert.

12. Verfahren nach Anspruch 10 oder 11, **dadurch gekennzeichet, daß** die Tönpaste (C) mindestens ein farb- und/oder effektgebendes Pigment und mindestens ein Netzmittel und/oder einen Emulgator enthält.

13. Verfahren nach Anspruch 10 bis 12, **dadurch gekennzeichnet, daß** die Tönpaste (C) mindestens ein wasserverdünnbares (Meth)Acrylatcpolymerisat und/oder einen Verdicker auf Schichtsilikatbasis und/oder Polyurethanbasis enthält.

14. Mischsystem zur Herstellung oder zur nachträglicher Korrektur des Farbtons und/oder der optischen Effekte einer farb- und/oder effektgebenden Pulverslurry (A) gemäß einem der Ansprüche 1 bis 9, umfassend
(I) mindestens eine farb- und/oder effektgebende Pulverslurry (B) und/oder mindestens eine Pulverklarlack-Slurry (B),
(II) mindestens zwei mit der Pulverlsurry (B) und untereinander verträglichen, farblich unterschiedlichen Tönpasten und
(III) ein Farbmischformel-System.

15. Mischsystem nach Anspruch 14, **dadurch gekennzeichet, daß** die Tönpaste (C) mindestens ein farb- und/oder effektgebendes Pigment und mindestens ein Netzmittel und/oder einen Emulgator enthält.

16. Mischsystem nach Anspruch 14 oder 15, **dadurch gekennzeichnet, daß** die Tönpaste (C) mindestens ein wasserverdünnbares (Meth)Acrylatcpolymerisat und/oder einen Verdicker auf Schichtsilikatbasis und/oder Polyurethan enthält.

17. Mischsystem nach einem der Ansprüche 14 bis 16, **dadurch gekennzeichnet, daß** es in der Form eines Modulsystems vorliegt, bei dem die Module standardisierte gebrauchsfertige Handelsprodukte sind, deren anwendungstechnische Eigenschaftsprofile genau aneinander angepaßt sind und sich gegenseitig ergänzen.

18. Verwendung der farb- und/oder effektgebenden Pulverslurry (A) gemäß einem der Ansprüche 1 bis 9, der mit Hilfe des Verfahrens gemäß einem der Ansprüche 10 bis 13 und/oder der mit Hilfe des Mischsystems gemäß einem der Ansprüche 14 bis 17 hergestellten oder nachträglich in ihrem Farbton und/oder ihren optischen Effekten korrigierten farb- und/oder effektgebenden Pulverslurry (A) für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating und die hnprägnierung und/oder Beschichtung elektrotechnischer Bauteile.

## Revendications

1. Suspension de poudre (A), colorante et/ou à effets, pouvant être préparée par mélange d'une suspension de poudre (B), colorante et/ou à effets, différente de la suspension de poudre (A), ou d'une suspension de poudre (B) pour vernis transparent, avec au moins une pâte de nuançage (C).

2. Suspension de poudre (A), colorante et/ou à effets, selon la revendication 1, **caractérisée en ce qu'**on en corrige après coup, avec au moins une pâte de nuançage (C), la teinte et/ou les effets optiques.

3. Suspension de poudre (A), colorante et/ou à effets, selon la revendication 1 ou 2, **caractérisée en ce qu'**on mélange l'une à l'autre la suspension de poudre (B), colorante et/ou à effets, ou la suspension de poudre (B) pour vernis transparent, et la pâte de nuançage ou les pâtes de nuançage (C), et/ou la suspension de poudre (A) et la pâte de nuançage ou les pâtes de nuançage (C), selon un rapport en poids (B):(C) ou (A):(C) de 1000:1 à 10:1.

4. Suspension de poudre (A), colorante et/ou à effets, selon l'une des revendications 1 à 3, **caractérisée en ce qu'**on utilise une suspension de poudre (B) colorante.

5. Suspension de poudre (A), colorante et/ou à effets, selon la revendication 4, **caractérisée en ce qu'**on utilise une suspension de poudre (B) colorante ayant une nuance claire.

6. Suspension de poudre (A), colorante et/ou à effets, selon la revendication 5, **caractérisée en ce qu'**on utilise une suspension de poudre (B) colorante ayant une nuance achromatique.

7. Suspension de poudre (A), colorante et/ou à effets, selon la revendication 6, **caractérisée en ce qu'**on utilise une suspension de poudre (B) blanche.

8. Suspension de poudre (A), colorante et/ou à effets, selon l'une des revendications 1 à 7, **caractérisée en ce que** la pâte de nuançage (C) contient au moins un pigment colorant et/ou à effets et au moins un mouillant et/ou un émulsifiant.

9. Suspension de poudre (A), colorante et/ou à effets, selon la revendication 8, **caractérisée en ce que** la pâte de nuançage (C) contient au moins un copolymère de (méth)acrylate diluable à l'eau et/ou un épaississant à base d'un phyllosilicate et/ou à base de polyuréthanne.

10. Procédé de fabrication d'une suspension de poudre (A), colorante et/ou à effets, selon l'une des revendications 1 à 9, **caractérisé en ce qu'**on mélange une suspension de poudre (B), colorante et/ou à effets, différente de la suspension de poudre (A), ou une suspension de vernis transparent en poudre (B), à au moins une pâte de nuançage (C), ce qui donne la suspension de poudre (A).

11. Procédé de fabrication d'une suspension de poudre (A), colorante et/ou à effets, selon la revendication 10, **caractérisé en ce qu'**on en corrige après coup, avec au moins une pâte de nuançage (C), la teinte et/ou les effets optiques.

12. Procédé selon la revendication 10 ou 11, **caractérisé en ce que** la pâte de nuançage (C) contient au moins un pigment colorant et/ou à effets et au moins un mouillant et/ou un émulsifiant.

13. Procédé selon les revendications 10 à 12, **caractérisé en ce que** la pâte de nuançage (C) contient au moins un copolymère de (méth)acrylate diluable à l'eau et/ou un épaississant à base d'un phyllosilicate et/ou à base de polyuréthanne.

14. Système de mélange pour fabriquer ou pour corriger après coup la teinte et/ou les effets optiques d'une suspension de poudre (A), colorante et/ou à effets, selon l'une des revendications 1 à 9, comprenant :
(I) au moins une suspension de poudre (B) colorante et/ou à effets et/ou au moins une suspension (B) de vernis transparent en poudre,
(II) au moins deux pâtes de nuançage, de couleurs différentes, compatibles avec la suspension de poudre (B) et les unes avec les autres, et
(III) un système de mélange de couleurs.

15. Système de mélange selon la revendication 14, **caractérisé en ce que** la pâte de nuançage (C) contient au moins un pigment colorant et/ou à effets et au moins un mouillant et/ou un émulsifiant.

16. Système de mélange selon la revendication 14 ou 15, **caractérisé en ce que** la pâte de nuançage (C) contient au moins un copolymère de (méth)acrylate diluable à l'eau et/ou un épaississant à base d'un phyllosilicate et/ou d'un polyuréthanne.

17. Système de mélange selon l'une des revendications 14 à 16, **caractérisé en ce qu'**il se présente sous forme d'un système modulaire, dans lequel les modules sont des produits du commerce normalisés, prêts à l'emploi, dont les profils de propriétés techniques en cours d'utilisation sont rigoureusement adaptés les uns aux autres et se complètent les uns les autres.

18. Utilisation de la suspension de poudre (A), colorante et/ou à effets, selon l'une des revendications 1 à 9, fabriquée à l'aide du procédé selon l'une des revendications 10 à 13 et/ou à l'aide du système de mélange selon l'une des revendications 14 à 17, ou encore de la suspension de poudre (A), colorante et/ou à effets, ayant après coup subi une correction de sa teinte et/ou de ses effets optiques, pour la peinture de première monte de carrosseries automobiles, pour la peinture de réparation de carrosseries automobiles, pour le laquage d'ouvrages en intérieur et en extérieur, pour le laquage de portes, de fenêtres et de meubles, ainsi que pour le laquage industriel, notamment le laquage en bande, le laquage des récipients, et l'imprégnation et/ou l'enduction de composants électrotechniques.

## Claims

1. Colour and/or effect powder slurry (A), preparable by mixing a non-(A) colour and/or effect powder slurry (B) or a clearcoat powder slurry (B) with at least one tinting paste (C).

2. Colour and/or effect powder slurry (A) according to Claim 1, **characterized in that** the shade and/or optical effects of said slurry is/are corrected subsequently using at least one tinting paste (C).

3. Colour and/or effect powder slurry (A) according to Claim 1 or 2, **characterized in that** the colour and/or effect powder slurry (B) or the clearcoat powder slurry (B) and the tinting paste or tinting pastes (C) and/or the powder slurry (A) and the tinting paste or tinting pastes (C) are mixed with one another in a weight ratio (B):(C) or (A):(C) of from 1000:1 to 10:1.

4. Colour and/or effect powder slurry (A) according to any of Claims 1 to 3, **characterized in that** a colour powder slurry (B) is used.

5. Colour and/or effect powder slurry (A) according to Claim 4, **characterized in that** a colour powder slurry (B) having a pale shade is used.

6. Colour and/or effect powder slurry (A) according to Claim 5, **characterized in that** a colour powder slurry (B) having an achromatic shade is used.

7. Colour and/or effect powder slurry (A) according to Claim 6, **characterized in that** a white powder slurry (B) is used.

8. Colour and/or effect powder slurry (A) according to any of Claims 1 to 7, **characterized in that** the tinting paste (C) comprises at least one colour and/or effect pigment and at least one wetting agent and/or one emulsifier.

9. Colour and/or effect powder slurry (A) according to Claim 8, **characterized in that** the tinting paste (C) comprises at least one water-dilutable (meth)acrylate copolymer and/or one phyllosilicate-based and/or polyurethane-based thickener.

10. Process for preparing a colour and/or effect powder slurry (A) according to any of Claims 1 to 9, **characterized in that** a non-(A) colour and/or effect powder slurry (B) or a powder clearcoat slurry (B) is mixed with at least one tinting paste (C), to give the powder slurry (A).

11. Process for preparing a colour and/or effect powder slurry (A) according to Claim 10, **characterized in that** the shade and/or optical effects of said slurry is/are corrected subsequently using at least one tinting paste (C).

12. Process according to Claim 10 or 11, **characterized in that** the tinting paste (C) comprises at least one colour and/or effect pigment and at least one wetting agent and/or one emulsifier.

13. Process according to Claim 10 to 12, **characterized in that** the tinting paste (C) comprises at least one water-dilutable (meth)acrylate copolymer and/or a phyllosilicate-based and/or polyurethane-based thickener.

14. Mixer system for preparing or subsequently correcting the shade and/or the optical effects of a colour and/or effect powder slurry (A) according to any of Claims 1 to 9, comprising
(I) at least one colour and/or effect powder slurry (B) and/or at least one clearcoat powder slurry (B),
(II) at least two different-coloured tinting pastes compatible with the powder slurry (B) and with one another, and
(III) a paint mixing formula system,

15. Mixer system according to Claim 14, **characterized in that** the tinting paste (C) comprises at least one colour and/or effect pigment and at least one wetting agent and/or one emulsifier.

16. Mixer system according to Claim 14 or 15, **characterized in that** the tinting paste (C) comprises at least one water-dilutable (meth)acrylate copolymer and/or a phyllosilicate-based thickener and/or polyurethane.

17. Mixer system according to any of Claims 14 to 16, **characterized in that** it is in the form of a modular system in which the modules are standardized, ready-to-use, commercial products whose performance properties profiles are precisely adapted to one another and complement one another.

18. Use of the colour and/or effect powder slurry (A) according to any of Claims 1 to 9 or of the colour and/or effect powder slurry (A) prepared and/or subsequently corrected, in terms of its shade and/or its optical effects, with the aid of the process according to any of Claims 10 to 13 and/or with the aid of the mixer system according to any of Claims 14 to 17, for automotive OEM finishing, automotive refinishing, the interior and exterior coating of constructions, the coating of doors, windows and furniture, or for industrial coating, including coil coating, container coating, and the impregnation and/or coating of electrical components.
